# EUROPÄISCHE PATENTANMELDUNG

(11) **EP 2 657 540 A2**
(43) Veröffentlichungstag der Anmeldung: **30.10.2013**
(21) Anmeldenummer: 13001961.5
(22) Anmeldetag: 15.04.2013
(51) Int. Cl.: F15B 15/14, F16D 25/08

(54) **Kolbenstange für einen Hydraulikzylinder**

(30) Priorität: 25.04.2012 DE 102012206762
(71) Anmelder: Schaeffler Technologies AG & Co. KG, 91074 Herzogenaurach (DE)
(72) Erfinder: Müller, Christoph, 77815 Bühl (DE)

(57) **Zusammenfassung**

Die Erfindung betrifft eine Kolbenstange (2) für einen Hydraulikzylinder, welcher ein Gehäuse und einen in diesem mittels der Kolbenstange axial bewegbaren Kolben aufweist, wobei die aus dem Gehäuse herausführende Kolbenstange von einem Federelement (1) umhüllt ist, welches mit seiner einen Endwindung (1.2) an/in dem Gehäuse und mit seiner anderen Endwindung (1.1) an einem Anschlagelement (3) der Kolbenstange axial festgelegt ist. Erfindungsgemäß ist das Anschlagelement von einer Durchmessererweiterung der Kolbenstange gebildet und weist eine wendelartige, mit Windungen des Federelementes korrespondierende, Einkerbung (3.1) auf.

## Beschreibung

Die Erfindung betrifft eine Kolbenstange für einen Hydraulikzylinder, welcher ein Gehäuse und einen in diesem mittels der Kolbenstange axial bewegbaren Kolben aufweist, wobei die aus dem Gehäuse herausführende Kolbenstange von einem Federelement umhüllt ist, welches mit seiner einen Endwindung an/in dem Gehäuse und mit seiner anderen Endwindung an einem Anschlagelement der Kolbenstange axial festgelegt ist.

Gattungsgemäße Hydraulikzylinder kommen beispielsweise innerhalb einer hydraulischen Strecke für die Kupplungsbetätigung von Kraftfahrzeugen zum Einsatz und betreffen dort verwendete Geber- oder Nehmerzylinder. Sie weisen ein mit Fluid durchströmbares Gehäuse mit einem im Innenraum ausgebildeten Druckraum auf, in welchem ein von einer Kolbenstange betätigbarer Kolben axial bewegbar ist. Dabei kommen Federelemente zum Einsatz, die der Aufbringung einer Vorspannung auf den Kolben bzw. der Unterstützung bei dessen Rückstellbewegung dienen. Diese Federelemente können innerhalb des Druckraumes, wie beispielsweise bei einem in der DE 10 2009 013 394 A1 beschriebenen Nehmerzylinder oder bei einem in der DE 10 2008 050292 A1 dargestellten Geberzylinder, angeordnet sein.

Andere bekannte Hydraulikzylinder sehen eine Anordnung eines Federelementes außerhalb des Druckraumes vor. So wird in der DE 103 52 941 A1 ein Druckmittelzylinder für eine hydraulische Betätigungseinrichtung offenbart, dessen von einem axial verschiebbaren Kolben schwenkbeweglich aufgenommene Kolbenstange außerhalb des Gehäuses von einem Federelement umgeben ist. Das nicht näher bezeichnete Federelement stützt sich einerseits in einem Randbereich des Gehäuses und andererseits an einem dem Gehäuse abgewandten Ende der Kolbenstange ab, welche hier ein, beispielsweise von einem Federteller gebildetes, Anschlagelement aufweist. Dabei kommen die jeweiligen Endwindungen des Federelementes entsprechend zur Anlage bzw. erfahren eine axiale Festlegung.

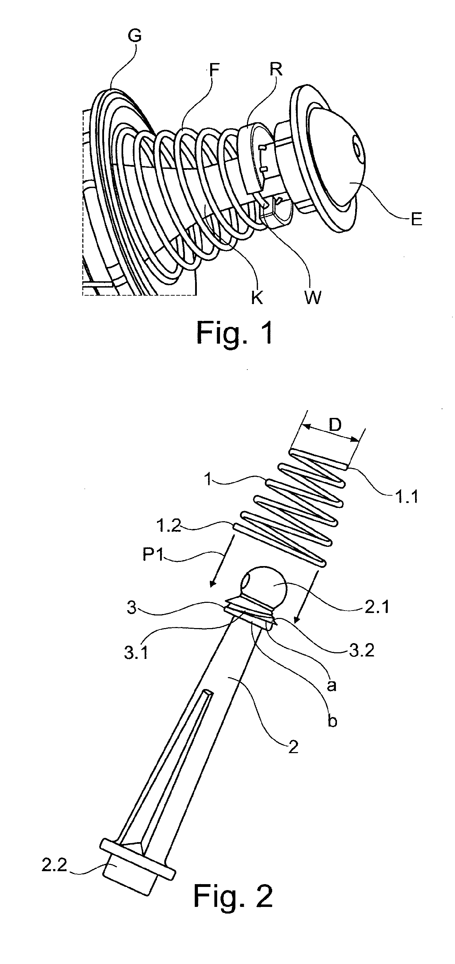

Eine weitere bekannte Möglichkeit einer axialen Festlegung eines als Schraubenfeder ausgebildeten Federelementes sieht vor, das kolbenstangenseitige Ende des Federelementes mittels eines seitlich (in radialer Richtung) auf die Endwindung aufschiebbaren Ringes zu befestigen. Zu diesem Zweck ist der Ring nicht radial umlaufend, sondern in der Art eines Sprengringes ausgeführt, wodurch das seitliche Aufschieben des Ringes auf die Endwindung ermöglicht wird. Dabei greift die Endwindung der Schraubenfeder in eine Nut des Ringes ein. Der Ring wird hierbei am oberen, dem Gehäuse abgewandten, Ende der Kolbenstange mittels einer Schnappverbindung befestigt. Die Schraubenfeder ist somit auf der Kolbenstange zentriert und axial festgelegt. Das andere Ende des Federelementes kommt am Gehäuse oder in einem innen liegenden Randbereich des Gehäuses zur Anlage bzw. wird dort befestigt. Dieser Stand der Technik mit einem einseitig geschlitzten Ring zur Festlegung der Schraubenfeder an der Kolbenstange ist in Figur 1 gezeigt.

Der Nachteil der bekannten Hydraulikzylinder mit einem die Kolbenstange umhüllenden Federelement besteht darin, dass zusätzliche Bauteile zur Fixierung/Abstützung des Federelementes an der Kolbenstange notwendig sind. Dies erfordert zusätzliche Werkzeuge und Kosten und erschwert die Montage.

Die Aufgabe der Erfindung besteht darin, eine Kolbenstange für einen Hydraulikzylinder zu schaffen, bei welcher eine einfache Montage des Federelementes ohne zusätzliche Bauteile gewährleistet ist.

Diese Aufgabe wird mit den Merkmalen des ersten Patentanspruchs gelöst. Weitere vorteilhafte Ausgestaltungen ergeben sich aus den Unteransprüchen.

Bei einer Kolbenstange für einen Hydraulikzylinder, welcher ein Gehäuse und einen in diesem mittels der Kolbenstange axial bewegbaren Kolben aufweist, wobei die aus dem Gehäuse herausführende Kolbenstange von einem Federelement umhüllt ist, welches mit seiner einen Endwindung an/in dem Gehäuse und mit seiner anderen Endwindung an einem Anschlagelement der Kolbenstange axial festgelegt ist, ist erfindungsgemäß das Anschlagelement von einer Durchmessererweiterung der Kolbenstange gebildet und weist eine wendelartige, mit Windungen des Federelementes korrespondierende, Einkerbung auf.

Das Anschlagelement weist zumindest auf einem Teilumfang wenigstens einen in radialer Richtung vorstehenden Kragen auf, an dem die kolbenstangenseitige Endwindung des Federelementes axial zur Anlage bringbar ist. Die wendelartige Einkerbung ist zumindest auf einem Teilumfang des Anschlagelementes angeordnet. Dabei weist die wendelartige Einkerbung zumindest einen aus Richtung des Endes der Kolbenstange oberhalb des Kragens nach schräg unten bis unterhalb des Kragens reichenden Verlauf auf.

Vorteilhafter Weise ist der Querschnitt der Einkerbung des Anschlagelementes an den Materialdurchmesser der Windungen des als eine Schraubenfeder ausgebildeten Federelementes angepasst. Dabei kann das Federelement/die Schraubenfeder eine zylindrische oder eine konische Form haben.

Bei der Montage von Kolbenstange und Schraubenfeder ist zumindest ein Teil der Windungen der Schraubenfeder in der Art eines Gewindes mit der Einkerbung in Kontakt bringbar. Zumindest ist aber bei der Montage von Kolbenstange und Schraubenfeder die kolbenstangenseitige Endwindung der Schraubenfeder in der Art eines Gewindes mit der Einkerbung in Kontakt bringbar.

In einer Montage-Endposition ist die Endwindung der Schraubenfeder an einer radial gerichteten Anlagefläche und an einer axial gerichteten Anlagefläche des Anschlagelementes festgelegt.

Vorzugsweise ist das Anschlagelement einstückig mit der Kolbenstange durch Spritzgießen hergestellt.

Die Erfindung wird nachfolgend anhand eines Ausführungsbeispieles und zugehöriger Zeichnungen näher erläutert.

Es zeigen:
- Figur 1: eine perspektivische Darstellung einer kolbenstangenseitigen Befestigung eines Federelementes nach dem Stand der Technik
- Figur 2: eine erste Montageposition des Federelementes in Bezug auf die Kolbenstange der erfindungsgemäßen Lösung in perspektivischer Darstellung
- Figur 3: eine zweite Montageposition des Federelementes in Bezug auf die Kolbenstange der erfindungsgemäßen Lösung in perspektivischer Darstellung
- Figur 4: eine perspektivische Darstellung von sich in einer Montage-Endposition befindenden Federelement und Kolbenstange
- Figur 5: ein Detail X nach Figur 4 in vergrößerter Darstellung

In Fig. 1 ist eine Lösung des Standes der Technik gezeigt, bei der ein aus Kunststoff bestehendes, ringförmiges Bauteil in der Art eines Sprengringes eingesetzt wird. Dieser geschlitzte Ring R wird seitlich, d.h. in radialer Richtung, auf eine Endwindung W der als Schraubenfeder ausgebildeten Feder F aufgeschoben, welche sich an dem oberen, von einem Gehäuse G (hier nur angedeutet) abgewandten, Ende E der Kolbenstange K befindet. Dabei greift die Endwindung W in eine Nut des Ringes R ein, wodurch die Feder F auf der Kolbenstange K zentriert ist. Durch Einschnappen des Ringes R am oberen Ende E der Kolbenstange K erfolgt hier eine axiale Festlegung der Feder F, während deren anderes Ende am Gehäuse G bzw. in einem innen liegenden Randbereich des Gehäuses G zur Anlage kommt oder befestigt wird.

Die Fig. 2 zeigt die erfindungsgemäße Lösung in einer ersten Montageposition. Dabei befindet sich ein als Schraubenfeder ausgebildetes Federelement 1 noch außerhalb einer Kolbenstange 2. Die Pfeile P1 zeigen die Montagerichtung an, das heißt, die vorzugsweise konisch ausgebildete Schraubenfeder 1 wird in axialer Richtung der Kolbenstange 2 über deren freies kugelförmiges Ende 2.1 geschoben. Das andere Ende 2.2 der Kolbenstange 2 befindet sich im montierten Zustand in an sich bekannter Weise mit einem in einem Gehäuse eines Hydraulikzylinders axial geführten Kolben in Wirkverbindung (nicht dargestellt). Der Hydraulikzylinder kann hierbei ein Geber- oder Nehmerzylinder in einer hydraulischen Strecke zur Kupplungsbetätigung eines Kraftfahrzeuges sein. In beispielhafter Weise bezieht sich die Erfindung auf einen Semi Slave Cylinder (SSC).

Wie aus Fig. 2 ersichtlich ist, weist die Kolbenstange 2 nach ihrem kugelförmigen Ende 2.1 eine ein Anschlagelement 3 bildende Durchmessererweiterung auf. An dem Anschlagelement 3 ist eine wendelartige Einkerbung 3.1 vorgesehen, die in der Art eines Innengewindes an dem Außenumfang des Anschlagelementes 3 - diesen zumindest teilweise umlaufend - angeordnet ist. Das Anschlagelement 3 weist außerdem wenigstens einen zumindest auf einem Teilumfang angeordneten radialen Kragen 3.2 auf, der den größten Durchmesser/Umfang des Anschlagelementes 3 bildet und von der wendelartigen Einkerbung 3.1, die aus Richtung des Endes 2.1 der Kolbenstange 2 schräg nach unten verläuft, unterbrochen wird.

Dabei weist der Außenumfang des Anschlagelementes 3 oberhalb des Kragens 3.2 einen sich in Richtung des Endes 2.1 der Kolbenstange 2 verringernden Durchmesser auf. Die Unterseite des Kragens 3.2 - auf der von dem Ende 2.1 der Kolbenstange 2 weg gerichteten Seite - stellt eine radial verlaufende Anlagefläche a dar, die an einen ringbundartigen Teil des Anschlagelementes 3 mit einer axial gerichteten Anlagefläche b grenzt, dessen Durchmesser/Umfang kleiner ist als der Durchmesser/Umfang des Kragens 3.2.

In vorteilhafter Weise ist das Anschlagelement 3 einstückig mit der Kolbenstange 2 hergestellt, vorzugsweise mittels Spritzgießen. Dabei kann die Ausführung der wendelartigen Einkerbung 3.1 und des radial vorstehenden Kragens 3.2 insbesondere auch in Abhängigkeit von der Ausbildung des Federelementes 1 variieren. So kann die Einkerbung 3.1 nicht nur auf einem Teil des Außenumfangs des Anschlagelementes 3 vorgesehen sein, sondern diesen zumindest einmal umlaufen. Es können über dem Außenumfang verteilt mehrere radial abstehende Kragen 3.2 angeordnet sein. Die hier dargestellte Schraubenfeder 1 weist eine erste, mit minimalem Durchmesser D versehene Endwindung 1.1 sowie eine zweite, mit maximalem Durchmesser D versehene Endwindung 1.2 auf. Bei in den Hydraulikzylinder eingebauter, hier nicht dargestellter, Endposition von Kolbenstange 2 und Schraubenfeder 1 befindet sich die Endwindung 1.2 in einem Randbereich des Gehäuses zur Anlage. Unter bestimmten Voraussetzungen könnte die hier konisch ausgebildete Schraubenfeder 1 auch eine zylindrische Form haben. Dann wäre der Durchmesser D aller Windungen gleich groß, wodurch praktisch jede Windung im Montageprozess von Kolbenstange 2 und Schraubenfeder 1 mit der wendelartigen Einkerbung 3.1 des Anschlagelementes 3 in Eingriff kommen würde.

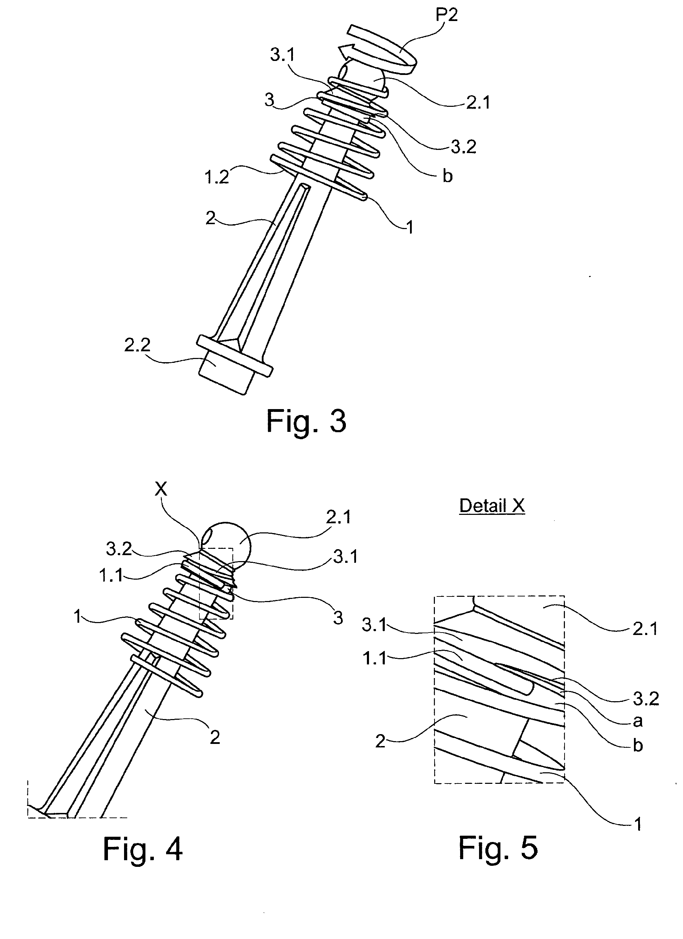

Bei der in Fig. 3 gezeigten zweiten Montageposition befindet sich die gesamte Schraubenfeder 1 bereits an der Kolbenstange 2. Da sich der Durchmesser D der Windungen der Schraubenfeder 1 im vorliegenden Ausführungsbeispiel von der gehäuseseitigen Endwindung 1.2 in Richtung zur Endwindung 1.1 am kugelförmigen Ende 2.1 der Kolbenstange 2 kontinuierlich verringert, berühren bei der Bewegung der Schraubenfeder 1 in Richtung der Längsachse der Kolbenstange 2 die Windungen, deren Durchmesser D nur gering größer als der Durchmesser des Anschlagelementes 3 ist, den Außenumfang des Anschlagelementes 3 der Kolbenstange 2. Dabei kommen die Windungen zuerst mit dem Teil der wendelartigen Einkerbung 3.1 in Kontakt, der sich oberhalb des Kragens 3.2 befindet. Durch Drehen der Kolbenstange 2 oder der Schraubenfeder 1 um deren Längsachse - Drehrichtung ist in Fig.3 durch den Pfeil P2 dargestellt - gelangt eine Windung der Schraubenfeder 1 mit der Einkerbung 3.1 in Eingriff.

Durch weiteres Drehen von Kolbenstange 2 oder Schraubenfeder 1 gerät die nächste Windung in die Einkerbung 3.1. Es erfolgt ein "Anschrauben" der Schraubenfeder 1 auf die Kolbenstange 2 analog einer Schraube in ein Gewinde, wobei jeweils eine Windung der Schraubenfeder 1 mit der Einkerbung 3.1 korrespondiert bis die Endwindung 1.1 mit dem geringsten Durchmesser D in die Einkerbung 3.1 eingreift. Nach Verlassen der Einkerbung 3.1 (durch Weiterdrehen) kommt die Endwindung 1.1 unterhalb des Kragens 3.2, d. h. auf der von dem kugelförmigen Ende 2.1 der Kolbenstange 2 abgewandten Seite, zur Anlage, wodurch die Schraubenfeder 1 an der Kolbenstange 2 zentriert und axial festgelegt ist. Die Endwindung 1.1 liegt dabei einerseits an der axial gerichteten Anlagefläche b des ringbundartigen Teils des Anschlagelementes 3 und andererseits an der durch den/die Kragen 3.2 gebildeten, radial gerichteten, Anlagefläche a an. Bei einer entsprechenden Auslegung des zur Kolbenstangenmitte hinzeigenden Ende der gewindeartigen Einkerbung 3.1 an dem Kragen 3.2 mit einer kleinen Fase, ist ein Zurückdrehen nach der Montage ausgeschlossen, da sich die letzte Windung der Feder wieder an die Feder anlegt und somit ein rückwirkendes Ausschrauben verhindert wird.

In Fig. 4 ist diese Montage-Endposition mit der am Anschlagelement 3 der Kolbenstange 2 zentrierten und axial festgelegten Schraubenfeder 1 dargestellt. Dabei ist der geringste Durchmesser D der Windungen der Schraubenfeder 1 nur geringfügig größer als der Durchmesser des ringbundartigen Teils mit der Anlagefläche b des Anschlagelementes 3, aber kleiner als der Durchmesser des die Anlagefläche a bildenden Kragens 3.2. Auch ist der Materialdurchmesser der Windungen der Schraubenfeder 1 dem Querschnitt der Einkerbung 3.1 angepasst, um ein leichtes "Schrauben" bzw. kein Herausrutschen zu ermöglichen.

In Fig. 5 ist ein Detail X gemäß der Fig. 4 in vergrößerter Darstellung gezeigt. Die über die Einkerbung 3.1 auf die Kolbenstange 2 aufgeschraubte Schraubenfeder 1 befindet sich unterhalb des Kragens 3.2. Sie liegt mit ihrer Endwindung 1.1 an den Anlageflächen a, b des Anschlagelementes 3 der Kolbenstange 2 an und ist somit zentriert und axial festgelegt.

Mit diesem in die Kolbenstange 2 integrierten Anschlagelement 3 wurde eine einfache Lösung zur radialen und axialen Festlegung eines außen liegenden Federelementes 1 an einer Kolbenstange 2 geschaffen. Neben einer einfachen Montage zeichnet sie sich durch Einsparen zusätzlicher Bauteile und Werkzeuge und somit durch Kosteneinsparung aus.

**Bezugszeichenliste**

| | |
|---|---|
| F | Feder |
| W | Endwindung |
| G | Gehäuse |
| K | Kolbenstange |
| E | Ende der Kolbenstange |
| R | Ring |
| | |
| a. | Federelement/Schraubenfeder |
| 1.1 | kolbenstangenseitige Endwindung |
| 1.2 | gehäuseseitige Endwindung |
| 2 | Kolbenstange |
| 2.1 | Ende der Kolbenstange |
| 2.2 | gehäuseseitiges Ende der Kolbenstange |
| 3 | Anschlagelement |
| 3.1 | wendelartige Einkerbung |
| 3.2 | Kragen |
| D | Durchmesser der Windungen |
| P1 | Montagerichtung |
| P2 | Drehrichtung |
| a | Anlagefläche |
| b | Anlagefläche |

## Patentansprüche

1. Kolbenstange für einen Hydraulikzylinder, welcher ein Gehäuse und einen in diesem mittels der Kolbenstange (2) axial bewegbaren Kolben aufweist, wobei die aus dem Gehäuse herausführende Kolbenstange (2) von einem Federelement (1) umhüllt ist, welches mit seiner einen Endwindung (1.2) an/in dem Gehäuse und mit seiner anderen Endwindung (1.1) an einem Anschlagelement (3) der Kolbenstange (2) axial festgelegt ist, **dadurch gekennzeichnet, dass** das Anschlagelement (3) von einer Durchmessererweiterung der Kolbenstange (2) gebildet ist und eine wendelartige, mit Windungen des Federelementes (1) korrespondierende, Einkerbung (3.1) aufweist.

2. Kolbenstange nach Anspruch 1, **dadurch gekennzeichnet, dass** das Anschlagelement (3) zumindest auf einem Teilumfang wenigstens einen in radialer Richtung vorstehenden Kragen (3.2) aufweist, an dem die kolbenstangenseitige Endwindung (1.1) des Federelementes (1) axial zur Anlage bringbar ist.

3. Kolbenstange nach Anspruch 1 oder 2, **dadurch gekennzeichnet, dass** die wendelartige Einkerbung (3.1) zumindest auf einem Teilumfang des Anschlagelementes (3) angeordnet ist.

4. Kolbenstange nach Anspruch 2 oder 3, **dadurch gekennzeichnet, dass** die wendelartige Einkerbung (3.1) zumindest einen aus Richtung des Endes (2.1) der Kolbenstange (2) oberhalb des Kragens (3.2) nach schräg unten bis unterhalb des Kragens (3.2) reichenden Verlauf aufweist.

5. Kolbenstange nach einem der Ansprüche 1 bis 4, **dadurch gekennzeichnet, dass** der Querschnitt der Einkerbung (3.1) des Anschlagelementes (3) an den Materialdurchmesser der Windungen des als eine Schraubenfeder ausgebildeten Federelementes (1) angepasst ist.

6. Kolbenstange nach einem der Ansprüche 1 bis 5, **dadurch gekennzeichnet, dass** das Federelement/die Schraubenfeder (1) eine zylindrische oder eine konische Form hat.

7. Kolbenstange nach einem der Ansprüche 1 bis 6, **dadurch gekennzeichnet, dass** bei der Montage von Kolbenstange (2) und Schraubenfeder (1) zumindest ein Teil der Windungen der Schraubenfeder (1) in der Art eines Gewindes mit der Einkerbung (3.1) in Kontakt bringbar ist.

8. Kolbenstange nach einem der Ansprüche 1 bis 6, **dadurch gekennzeichnet, dass** bei der Montage von Kolbenstange (2) und Schraubenfeder (1) zumindest die kolbenstangenseitige Endwindung (1.1) der Schraubenfeder (1) in der Art eines Gewindes mit der Einkerbung (3.1) in Kontakt bringbar ist.

9. Kolbenstange nach einem der Ansprüche 1 bis 8, **dadurch gekennzeichnet, dass** in einer Montage-Endposition die Endwindung (1.1) der Schraubenfeder (1) an einer radial gerichteten Anlagefläche (a) und an einer axial gerichteten Anlagefläche (b) des Anschlagelementes (3) festgelegt ist.

10. Kolbenstange nach einem der Ansprüche 1 bis 9, **dadurch gekennzeichnet, dass** das Anschlagelement (3) einstückig mit der Kolbenstange (2) durch Spritzgießen hergestellt ist.
